(19) Europäisches Patentamt
European Patent Office
Office européen des brevets

(11) Veröffentlichungsnummer: **0 199 967 B1**

# (12) EUROPÄISCHE PATENTSCHRIFT

(45) Veröffentlichungstag der Patentschrift: **29.04.92**

(21) Anmeldenummer: **86103750.5**

(22) Anmeldetag: **19.03.86**

Die Akte enthält technische Angaben, die nach dem Eingang der Anmeldung eingereicht wurden und die nicht in dieser Patentschrift enthalten sind.

(51) Int. Cl.5: **C08G 18/78**, C08G 18/79, C08G 18/80, C08G 18/72, C08G 18/10, C08G 18/65, C08G 18/48, C08G 18/24, C09D 175/04

## (54) Verfahren zum Umkanten von Holzplatten.

(30) Priorität: **30.03.85 DE 3511754**

(43) Veröffentlichungstag der Anmeldung:
**10.12.86 Patentblatt 86/45**

(45) Bekanntmachung des Hinweises auf die Patenterteilung:
**29.04.92 Patentblatt 92/18**

(84) Benannte Vertragsstaaten:
**AT BE CH DE FR GB IT LI LU NL SE**

(56) Entgegenhaltungen:
**DE-A- 1 494 404** **DE-A- 1 962 808**
**DE-A- 2 522 189** **FR-A- 1 362 481**
**GB-A- 1 037 941** **GB-A- 1 208 595**

(73) Patentinhaber: **RHEIN-CHEMIE RHEINAU GmbH**
**Düsseldorfer Strasse 23-27**
**W-6800 Mannheim 81(DE)**

(72) Erfinder: **Schuster, Peter**
**Stengelhofstrasse 82**
**W-6800 Mannheim 81(DE)**
Erfinder: **Punessen, Rudolf, D.I.**
**Uhlandstrasse 7**
**W-6835 Brühl(DE)**
Erfinder: **Nützel, Karl, Dr.**
**Kornstrasse 23**
**W-6832 Neulussheim(DE)**
Erfinder: **Kopp, Richard, Dr.**
**Bilharzstrasse 15**
**W-5000 Koeln 80(DE)**
Erfinder: **Rasshofer, Werner, Dr.**
**Wolfskaul 10**
**W-5000 Koeln 80(DE)**

(74) Vertreter: **Jochum, Axel et al**
**c/o BAYER AG Zentralbereich Patente, Marken und Lizenzen**
**W-5090 Leverkusen 1, Bayerwerk(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 199 967 B1

## Beschreibung

Die Erfindung betrifft ein Verfahren zum Umkanten von Holzplatten, insbesondere Span- und Sperrholzplatten, mit einer solchen reaktionsfähigen Masse, wobei auch bei hellen Färbungen eine lichtechte Kante erzeugt wird, ohne daß die zu umkantende Holzplatte zuvor auf eine maximale Holzfeuchte von 7 Gew.-% getrocknet werden muß.

Umwelt- und Gebrauchseinflüsse können den Umleimer oder den Kunststoff einer Direktbeschichtung auf Möbelecken oder Kanten von Möbeln aus Holzplatten ablösen. Die Schnittkanten von Holzplatten, die in verschiedenen Formen und Stärken hergestellt und auf bestimmte Maße zugeschnitten werden, müssen jedoch aus verschiedenen Gründen verschlossen werden:

a) zur Anpassung des Abschlusses an das Design der Oberfläche,

b) zum Abdichten gegen Feuchtigkeit, denn Holzplatten quellen leicht an,

c) zum Schutz gegen Ausbrechen von Holzplattenteilen und

d) zur Verhinderung von Beschädigungen und Verletzungen anderer Körper, die gegen die Holzplattenkante stoßen.

Lösen sich nun Umleimer oder Direktbeschichtungen vom Möbelteil ab, so bilden die entstehenden scharfen Kanten in Büro, Haushalt, Schule etc. einen Gefahrenherd und stellen eine Gesundheitsgefährdung dar. Dieser kann durch die Verwendung von Massivholzumleimern zwar größtenteils begegnet werden, das Aufbringen von Massivholzumleimern erfordert jedoch einen erhöhten Arbeitsaufwand und führt so zu einer unerwünschten Verteuerung des Produkts.

Als Alternative zur Massivholzumleimung wurden bereits maschinelle Verfahren zur Verwendung von Systemen auf Polyurethanbasis bekannt (siehe auch Kunststoff-Journal 1982, Nr. 8, S. 47), wobei man bei der Umkantung von Holzplatten und Polyurethansystemen zwei Methoden unterscheidet.

Beim ersten Verfahren werden für das Polyurethan aromatische Diisocyanate verwendet, die den Vorteil haben, daß die durch normale trockene Lagerung der geschnittenen Holzplatte übliche Holzfeuchte von 8 bis 10 Gew.-% auf das Verfahren der Umkantung nicht störend einwirkt. Der Nachteil dieses Systems liegt darin, daß aufgrund der aromatischen Diisocyanate die erzeugte Polyurethanumkantung nicht lichtecht ist und deswegen nur in dunklen Farben angeboten werden kann.

Die zweite Methode verwendet Hexamethylendiisocyanat oder Isophorondiisocyanat und erzielt lichtechte Polyurethane. Mit diesen Systemen ist somit die Herstellung von farblosen oder hell gefärbten Polyurethankanten zu erreichen, die nicht zur Vergilbung neigen. Die Nachteile dieses Systems bestehen darin, daß wegen der bekannt geringen Reaktivität aliphatischer Isocyanate eine stärkere Katalyse notwendig ist, die zu einer sehr kurzen Verarbeitungszeit führt und Nebenreaktionen mit der Holzfeuchte ermöglicht. Das führt dazu, daß nur Holzplatten mit einer maximalen Holzfeuchte von 7 Gew.-% einwandfrei umkantet werden können. 7 Gew.-% Holzfeuchte sind jedoch nur bei Verwendung eines geeigneten Trockenaggregates für die Holzplatten zu realisieren.

Aufgabe der Erfindung war die Bereitstellung ein Verfahren zum Umkanten von Holzplatten mittels einer reaktionsfähigen Masse auf Polyurethanbasis, wobei das Holz nicht zuvor unter Feuchtewerte von 8 bis 10 Gew.-% (übliche Feuchte von Holzplatten) getrocknet werden muß. Gleichzeitig sollte die Verarbeitungszeit ausreichend lang und die Entformungszeit möglichst kurz sein. Schließlich sollten auch farblose oder helle lichtechte Beschichtungen bzw. Umkantungen möglich sein.

Gegenstand der vorliegenden Erfindung ist ein Verfahren zum Umkanten von Holzplatten, mit einer reaktionsfähigen Masse auf Polyurethan Basis aus

a) mindestens einer organischen Verbindung mit 2 bis 8 NCO-reaktiven Gruppen und einem durchschnittlichen Molekulargewicht von 400 bis 12000,

b) gegebenenfalls einer organischen Verbindung mit 2 bis 8 NCO-reaktiven Gruppen und einem durchschnittlichen Molekulargewicht von 62 bis 399,

c) Zinn-Katalysator,

d) aliphatischer Isocyanat-Verbindung mit mindestens zwei Isocyanatgruppen auf Basis von Hexamethylendiisocyanat, hydriertem Diphenylmethandiisocyanat oder Isophorondiisocyanat und

e) gegebenenfalls weiteren, an sich bekannten Hilfs- und Zusatzstoffen,

das dadurch gekennzeichnet ist, daß die als aliphatische Isocyanat-Verbindung Urethan- und/oder Isocyanurat- und/oder Uretdion- und/oder Uretonimin- und/oder Oxadiazatrion- und/oder Biuret-Gruppen aufweist.

Die ausgehärteten, lichtechten Beschichtungen erfüllen nicht nur die heutigen Ansprüche des Gesetzgebers und Kunden an die Sicherheit der Möbelprodukte, sie erlauben auch dem Möbeldesigner jede Freiheit, den Rundungsgrad von Ecken und Kanten zu beeinflussen und senken gegenüber der Massivholzumleimung die Herstellkosten ganz beträchtlich. Darüber hinaus haben die ausgehärteten Beschichtungen befriedigende mechanische Eigenschaften. Durch Variation der Einsatzverbindungen kann nahezu jede beliebige Härte eingestellt werden. Auch die Einfärbung des Materials in hellen Farbtönen ist möglich.

Auf 100 Gew.-Teile der Komponente a) kommen im allgemeinen 0 bis 50 Gew.-Teile b), 0,001 bis 5 Gew.-Teile c) und 10 bis 100 Gew.-Teile d) zum Einsatz, vorzugsweise 5 bis 20 Gew.-Teile b), 0,01 bis 2,5 Gew.-Teile c) und 10 bis 50 Gew.-Teile d).

Die Katalysatorkomponente c) kann sowohl der Isocyanat- als auch der Polyolkomponente einverleibt werden, desgleichen kann aus a), b) und c) in verschiedenen Mengenverhältnissen entweder ein OH-Prepolymer, das dann mit restlichen Mengen Isocyanatverbindung gehärtet wird, als auch ein NCO-Prepolymer, das dann mit den Polyolverbindungen aus a) und/oder b) gehärtet wird, hergestellt werden.

Als Ausgangskomponente a) werden Verbindungen mit mindestens zwei gegenüber Isocyanaten reaktionsfähigen Wasserstoffatomen von einem Molekulargewicht von 400 bis 12000 verwendet. Hierunter versteht man neben Aminogruppen, Thiolgruppen oder Carboxylgruppen aufweisenden Verbindungen vorzugsweise Hydroxylgruppen aufweisende Verbindungen mit der Funktionalität zwei bis acht und vorzugsweise einem Molekulargewicht 500 bis 3000, z.B. mindestens zwei, in der Regel 2 bis 8, vorzugsweise aber 2 bis 4 Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die infrage kommenden Hydroxylgruppen aufweisenden Polyester sind z.B. Umsetzungsprodukte von mehrwertigen, vorzugsweise zweiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole infrage. Die Polyester können anteilig endständige Carboxylgruppen aufweisen. Auch Polyester aus Lactonen, z.B. $\epsilon$-Caprolacton, oder aus Hydroxycarbonsäuren, z.B. $\omega$-Hydroxycapronsäure, sind einsetzbar.

Auch die erfindungsgemäß infrage kommenden, mindestens zwei, in der Regel zwei bis acht, vorzugsweise zwei bis drei, Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit rekationsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxydiphenylpropan, Anilin, Ethanolamin oder Ethylendiamin hergestellt. Auch Sucrosepolyether, wie sie z.B. in DE-AS 1 176 358 und 1 064 938 beschrieben werden, sowie auf Formit oder Formose gestartete Polyether (DE-OS 2 639 083 bzw. 2 737 951), kommen erfindungsgemäß infrage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäß geeignet.

Unter den Polythioethern seien insbesondere die Kondensationsprodukte von Thiodiglykol mit sich selbst und/ oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischether, Polythioetherester oder Polythioetheresteramide.

Als Polyacetale kommen z.B. die aus Glykolen, wie Diethylenglykol, Triethylenglykol, 4,4',-Dioxethoxydiphenyldimethylmethan, Hexandiol und Formaldehyd herstellbaren Verbindungen infrage. Auch durch Polymerisation cyclischer Acetale, z.B. Trioxan (DE-OS 1 694 128) lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-AS 1 694 080, 1 915 908 und 2 221 751; DE-OS 2 605 024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, oder durch Mitverwendung von Keton/Formaldehydkondensaten modifizierte natürliche Polyole, z.B. gemäß DE-PS 1 720 710, sind verwendbar.

Auch Anlagerungsprodukte von Alkylenoxiden an Phenol-Formaldehyd-Harze oder auch an Harnstoff-Formaldehydharze sind erfindungsgemäß einsetzbar.

Die genannten Polyhydroxylverbindungen können vor ihrer Verwendung im Polyisocyanat-Polyadditionsverfahren noch in der verschiedensten Weise modifiziert werden: So läßt sich gemäß DE-OS 2 210 839 und 2 544 195 ein Gemisch aus verschiedenen Polyhydroxylverbindungen (z.B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z.B. gemäß DE-OS 2 559 372 in die Polyhydroxylverbindungen Amidgruppen oder gemäß DE-OS 2 620 487 durch Umsetzung mit polyfunktionellen Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-OS 2 714 289, 2 714 292 und 2 714 293).

Als Ausgangskomponente a) kommen auch die sogenannten Aminopolyether oder Aminohydroxypolyether des obengenannten Molekulargewichtsbereichs in Betracht, deren endständige, gegenüber Isocyanatgruppen reaktionsfähige Gruppen zumindest zu 25, vorzugsweise zu 50, und insbesondere zu 80 bis 100 Äquivalentprozent aus primären und/oder sekundären, aromatisch oder aliphatisch gebundenen Aminogruppen und zum Rest aus primären und/oder sekundären, aliphatisch gebundenen Hydroxylgruppen bestehen.

In diesen Verbindungen können die die Aminogruppen tragenden, endständigen Reste mit der Polyetherkette auch über Urethan- oder Estergruppen verknüpft sein. Die Herstellung dieser "Aminopolyether" erfolgt in an sich bekannter Weise. So kann beispielsweise eine Aminierung von Polyhydroxypolyethern, wie Polypropylenglykolethern, durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-PS 3 155 728, US-PS 3 236 895 und FR-PS 1 551 605 beschrieben. In der FR-PS 1 466 709 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden, erfindungsgemäß als Komponente a) geeigneten Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Präpolymeren auf Basis von Polyhydroxypolyethern mit Hydroxylgruppen aufweisenden Enaminen, Aldiminen oder Ketiminen und anschließende Hydrolyse erhält man gemäß DE-OS 2 546 536 bzw. US-PS 3 865 791 höhermolekulare, endständige Aminogruppen aufweisende Verbindungen.

Ebenfalls einsetzbar sind andere Amino-Polyether des obengenannten Molekulargewichtsbereichs, wie sie beispielsweise gemäß DE-OS 2 948 419 oder gemäß DE-OS 3 039 600, 3 112 118, 3 131 252, 3 200 021, 3 144 991, 3 223 395 erhalten werden können.

Weitere Herstellungsverfahren für höhermolekulare Verbindungen mit endständigen Aminogruppen oder Hydrazidgruppen werden in DE-OS 1 694 152 beschrieben.

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen ) bzw. Polykondensationsreaktionen (z.B. zwischen Formaldehyd und Phenolen und/oder Aminen) in situ in den obengenannten, Hydroxylgruppen aufweisenden Verbindungen ablaufen läßt. Derartige Verfahren sind beispielsweise in DE-AS 1 168 075 und 1 260 142, sowie DE-OS 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-PS 3 383 351, 3 304 273, 3 523 093, 3 110 695; DE-AS 1 152 536) oder Polycarbonatpolyolen (DE-PS 1 769 795; US-PS 3 637 909) erhalten werden, sind für das erfindungsgemäße Verfahren geeignet. Bei Verwendung von Polyetherpolyolen, welche gemäß DE-OS 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomerer Carboxylgruppen eingeführt wurden (DE-OS 2 714 291, 2 739 620 und 2 654 746) können mit besonderem Vorteil in Kombination mit mineralischen Füllstoffen eingesetzt werden.

Durch Vinylpolymerisate modifizierte Polyaminoverbindungen mit endständigen Aminogruppen erhält man nach DE-OS 3 112 118, 3 200 021, EP-OS 84 141 sowie US-PS 4 286 074.

Bei der Verwendung von modifizierten Polyhydroxylverbindungen der obengenannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 bis 12000, z.B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-OS 2 706 297).

Vorzugsweise werden als NCO-reaktive Verbindungen (a) di- und trifunktionelle Polyether eines OH-Zahl-Bereichs von 20 - 200, die durch Anlagerung von Propylen- und/oder Ethylenoxid an geeignete Startermoleküle erhalten wurden, durch Polymere modifizierte Polyether, Polyester eines OH-Zahl-Bereichs von 40 - 150 oder mit Keton-Formaldehyd-Kondensaten modifizierte natürliche Polyole eingesetzt.

Als Ausgangskomponente b) werden Verbindungen mit mindestens zwei gegenüber Isocyanaten reaktionsfähigen Wasserstoffatomen und einem Molekulargewicht von 62 bis 399 verwendet. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 62 bis 399 verwendet werden.

Als Beispiele für derartige Verbindungen seien genannt: Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol, Glyzerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 399, Dipropylenglykol, höhere Polypropylenglykole mit einem Molekulargewicht bis 399, Dibutylenglykol, höhere Polybutylenglykole mit einem Molekulargewicht bis 399, 4,4'-Dihydroxy-diphenylpropan, Dihydroxymethylhydrochinon, Ethanolamin, Diethanolamin, Diisopropanolamin, N-Methyldiethanolamin, Triethanolamin und 3- und 2-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit") infrage, wie sie bei der Selbstkondensation von Formaldehydhydrat in Gegenwart von Metallverbindungen als Katalysator und von zur Endiolbildung befähigten Verbindungen als Co-Katalysator entstehen (DE-OS 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-OS 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-OS 2 638 759).

Erfindungsgemäß geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4' und 4,4'-diaminodiphenylmethan, p-Xylylendiamin, Bis-(3-aminopropyl)-methylamin, Diamino-perhydroanthrazene (DE-OS 2 638 731) und cycloaliphatische Triamine gemäß DE-OS 2 614 244. Auch Hydrazin und substituierte Hydrazine, z.B. Methylhydrazin, N,N'-Dimethylhydrazin und deren Homologe sowie Säuredihydrazide kommen erfindungsgemäß in Betracht, z.B. Carbodihydrazid, die Dihydrazide von Oxalsäure, Malonsäure, Bernsteinsäure, Glutarsäure, Adipinsäure, ß-Methyladipinsäure, Sebazinsäure, Hydracrylsäure und Terephthalsäure; Semicarbazido-alkylen-hydrazide, z.B. ß-Semicarbazidopropionsäurehydrazid (DE-OS 1 770 591), Semicarbazido-alkylen-carbazinester, z.B. 2-Semicarbazidoethyl-carbazinester (DE-OS 1 918 504) oder auch Amino-semicarbazid-Verbindungen, z.B. ß-Aminoethyl-semicarbazido-carbonat (DE-OS 1 902 931). Zur Steuerung ihrer Reaktivität können die Aminogruppen ganz oder teilweise durch Aldimin- bzw. Ketimin-Gruppen blockiert sein (US-PS 3 734 894; DE-OS 2 637 115).

Als Kettenverlängerungsmittel können erfindungsgemäß auch Verbindungen wie 1-Mercapto-3-aminopropan, Aminosäuren, z.B. Glycin, Alanin, Valin, Serin und Lysin sowie Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol, Ethylenglykolmonoethylether.

Als weitere erfindungsgemäß geeignete niedermolekulare Polyole vom Molekulargewicht bis 399 kommen Esterdiole der allgemeinen Formeln

$HO-(CH_2)_x-CO-O-(CH_2)_y-OH$ und
$HO-(CH_2)_x-O-CO-R-CO-O-(CH_2)_x-OH$

in denen

R einen Alkylenrest mit 1 bis 10, vorzugsweise 2 bis 6, C-Atomen bzw. einen Cycloalkylen- oder Arylenrest mit 6 bis 10 C-Atomen
x 2 bis 6 und
y 3 bis 5

bedeuten,

z.B. $\delta$ -Hydroxybutyl-$\epsilon$-hydroxy-capronsäureester, $\omega$-Hydroxyhexyl-$\gamma$-hydroxybuttersäureester, Adipinsäure-bis-($\beta$-hydroxyethyl)ester und Terephthalsäure-bis-($\beta$-hydroxyethyl)ester;

Diolurethane der allgemeinen Formel

$HO-(CH_2)_x-O-CO-NH-R'-NH-CO-O-(CH_2)_x-OH$

in der

R' einen Alkylenrest mit 2 bis 15, vorzugsweise 2 bis 6, C-Atomen oder einen Cycloalkylen- oder Arylenrest mit 6 bis 15 C-Atomen und
x eine Zahl zwischen 2 und 6

darstellen,

z.B. 1,6-Hexamethylen-bis(β-hydroxyethylurethan) oder 4,4'-Diphenylmethan-bis-(δ -hydroxybutylurethan); sowie Diolharnstoffe der allgemeinen Formel

$$HO-(CH_2)_x-\underset{R'''}{\underset{|}{N}}-CO-NH-R''-NH-CO-\underset{R'''}{\underset{|}{N}}-(CH_2)_x-OH$$

in der

R" einen Alkylenrest mit 2 bis 15, vorzugsweise 2 bis 9, C-Atomen oder einen Cycloalkylen- oder Arylenrest mit 6 bis 15 C-Atomen,

R"' Wasserstoff oder eine Methylgruppe und

x die Zahlen 2 oder 3

bedeuten,

z.B. 4,4'-Diphenylmethan-bis-(β-hydroxyethylharnstoff) oder die Verbindung der Formel

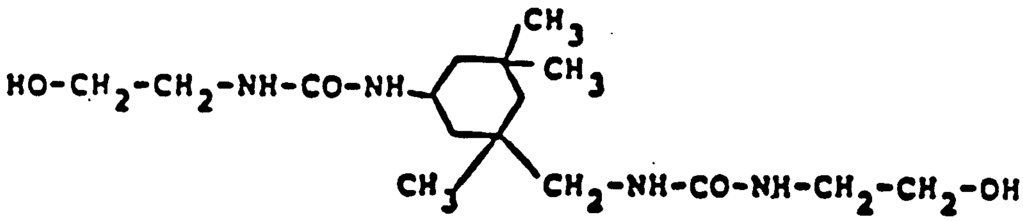

infrage.

Für manche Zwecke ist es vorteilhaft, Polyole einzusetzen, welche Sulfonat- und/oder Phosphonatgruppen enthalten (DE-OS 2 719 372), vorzugsweise das Addukt von Bisulfit an Butandiol-1,4 bzw. dessen Alkoxylierungsprodukte.

Als NCO-reaktive Verbindungen (b) werden vorzugsweise kurzkettige di- oder trifunktionelle Polyether eines OH-Zahl-Bereichs 300 - 800 oder Glykole wie Butandiol-1,4 und Ethylenglykol eingesetzt.

Als Komponente c) werden Katalysatoren für die Isocyanat-Additionsreaktion verwendet. Vorzugsweise ist einer dieser Katalysatoren eine Zinnverbindung, bevorzugt eine Zinn-II-Verbindung wie $SnCl_2$, Zinn-di-octoat oder eine Zinn-IV-Verbindung, besonders bevorzugt eine Diaryl- oder Dialkylzinn-IV-Verbindung wie Dimethylzinndichlorid, Dimethylzinnsulfid und weitere Dialkylzinndihalogenide, Dialkylzinnoxide und Dialkylzinnsulfide, Dialkylzinn-bis(alkylmercaptide) wie Dimethylzinn-bis-(butylmercaptid), Dibutylzinn-bis-(octylmercaptid), Dioctylzinn-bis-(laurylmercaptid), Dimethylzinn-bis-(thioglykolsäureethylhexylester), Dibutylzinn-bis-(thioglykolsäure-dodecylester), Dialkylzinn-monochlor-butanolat und weitere Dialkylzinn-monohalogen-monoalkoholate und -phenolate, Dialkylzinn-bisalkoholate wie Dimethylzinn-bis-octanolat oder Dibutylzinn-glykolat sowie entsprechende Dialkylzinn-bis-(thioalkoholate). Ganz besonders bevorzugt sind Dialkylzinn-IV-carboxylat-Verbindungen und Dialkylzinn-monohalogen-Verbindungen wie Dimethylzinn-chloro-octoat gemäß DE-OS 3 100 977, Stannoxan- und Thiostannoxan-Verbindungen mit Zinn-Carboxylat-Strukturen gemäß DE-OS 3 141 117, insbesondere jedoch Di-$C_1$-$C_8$-alkylzinn-bis-($C_1$-$C_4$-carbonsäure-$C_1$-$C_{24}$-alkyl-ester),wie Dibutylzinndiacetat, Dimethylzinnmaleat, Dibutylzinndilaurat, Dioctylzinndiacetat.

Als Komponente d) können Polyisocyanate verwendet werden, die wenigstens 2, vorzugsweise 2 bis 3 Isocyanatgruppen enthalten.

Die Herstellung isocyanuratgruppenhaltiger Polyisocyanate, die vorzugsweise NCO-Gehalte von 15 bis 30 Gew.-% besitzen, wird u.a. beschrieben in DE-PS 10 22 789, 12 22 067 und 10 27 394 sowie DE-OS 19 29 034 und 20 04 048. Biuretgruppenhaltige Polyisocyanate besitzen NCO-Gehalte von 30 bis 15, vorzugsweise von 25 bis 20 Gew.-% und Viskositäten von 6000 bis 500, vorzugsweise von 4000 bis 1000 mPas bei 20°C und werden beispielsweise beschrieben in DE-PS 11 01 394 und DE-OS 22 61 065. Urethangruppenhaltige Polyisocyanate können beispielsweise erhalten werden durch Umsetzung der obengenannten aliphatischen oder cycloaliphatischen Diisocyanate, vorzugsweise durch Umsetzung von Hexamethylendiisocyanat und Isophorondiisocyanat mit gegebenenfalls substituierten oder modifizierten Alkandiolen mit 2 bis 10, vorzugsweise 2 bis 6, Kohlenstoffatomen im Alkylenrest, wie Ethylenglykol, Butandiol-1,4, Dipropylenglykol, Hexandiol-1,6 und Neopentylglykol, sowie Hydroxypivalinsäureneopentylglykol oder deren Gemische, im Molverhältnis von ungefähr 2:1.

Das Äquivalentverhältnis von NCO-Gruppen zu NCO-reaktiven Gruppen, der sog. NCO-Index, beträgt 70 bis 130, bevorzugt 95 bis 110, besonders bevorzugt 100 bis 105. Es ist jedoch auch ein Arbeiten bei einer NCO-Kennzahl von > 130, beispielsweise bei gleichzeitiger Mitverwendung von Trimerisierungskatalysatoren, beispielsweise von Alkaliacetaten, zwecks Trimerisierung der überschüssigen NCO-Gruppen unter Isocyanuratbildung möglich.

Unter "NCO-Kennzahl" ist in obigem Zusammenhang das Verhältnis der NCO-Gruppen zu allen im Reaktionsgemisch vorliegenden, gegenüber NCO-Gruppen reaktionsfähigen Gruppen zu verstehen. Eine NCO-Kennzahl von 100 bedeutet in diesem Zusammenhang das Vorliegen äquivalenter Mengen an NCO-Gruppen und gegenüber Isocyanatgruppen reaktionsfähigen Gruppen.

Besonders bevorzugt sind durch Uretdiongruppen modifizierte aliphatische Polyisocyanate, sogenannte "dimere" Isocyanate, wie sie z.B. in DE-OS 1 670 720, DE-AS 3 030 513, DE-OS 3 227 779 oder von Saunders/Frisch in Urethane Chemistry and Technology, Pt. I, S. 61 ff (1982) beschrieben werden und/oder Isocyanuratgruppenhaltige aliphatische Polyisocyanate, sogenannte "trimere" Isocyanate und/oder Oxadiazatrion-Gruppen aufweisende Polyisocyanate, wie sie etwa nach US-PS 3 748 329 zugänglich sind.

Der NCO-Gehalt der erfindungsgemäß einsetzbaren Isocyanate beträgt ca. 3 bis 35, bevorzugt 10 bis 30, besonders bevorzugt 15 bis 25 Gew.-%.

Beim erfindungsgemäßen Verfahren können als weitere Komponenten e) die aus der Polyurethanchemie an sich bekannten Hilfs- und Zusatzmittel mitverwendet werden.

Beispielsweise können Treibmittel wie Aceton, Ethylacetat und insbesondere halogensubstituierte Alkane wie Dichlormethan, Trichlormethan, Monofluortrichlormethan, Chlordifluormethan oder Dichlordifluormethan verwendet werden. Die Mitverwendung von Wasser ist möglich.

Weitere Katalysatoren fur die Isocyanat-Polyadditionsreaktion können zusätzlich zu den bevorzugten Zinnverbindungen eingesetzt werden, wenn besondere Zwecke damit verfolgt werden, z.B. tertiäre Amine, wie N-Ethyl-morpholin, N,N,N',N'-Tetramethyl-ethylendiamin, Pentamethyldiethylen-triamin und höhere Homologe (DE-OS 2 624 527 und 2 624 528), 1,4-Diazabicyclo-(2,2,2)-octan, N-Methyl-N'-dimethylaminoethylpiperazin, Bis-(dimethylaminoalkyl)-piperazine (DE-OS 2 636 787), N,N-Dimethylbenzylamin, Bis-(N,N-diethylaminoethyl)-adipat, N,N,N', N'-Tetramethyl-1,4-butandiamin, N,N-Dimethyl-$\beta$-phenylethylamin, 1,2-Dimethylimidazol, 2-Methylimidazol, monocyclische und bicyclische Amidine (DE-OS 1 720 633, 2 722 514, 2 439 550) Aminoalkylether nach DE-OS 3 140 633, EP-OS 54 219, Orthocarbonsäureester gemäß DE-OS 2 922 967, Bis-(dialkylamino)alkyl-ether (US-PS 3 330 782, DE-AS 1 030 558, DE-OS 1 804 361 und 2 618 280) sowie Amidgruppen (vorzugsweise Formamidgruppen) aufweisende tertiäre Amine gemäß den DE-OS 2 523 633 und 2 732 292). Als Katalysatoren kommen auch an sich bekannte Mannichbasen aus sekundären Aminen, wie Dimethylamin und Aldehyden, vorzugsweise Formaldehyd, oder Ketonen wie Aceton Methylethylketon oder Cyclohexanon und Phenolen, wie Phenol, Nonylphenol oder Bisphenol, infrage.

Gegenüber Isocyanatgruppen aktive Wasserstoffatome aufweisende tertiäre Amine als Katalysator sind z.B. Triethanolamin, Triisopropanolamin, N-Methyl-diethanolamin, N-Ethyl-diethanolamin, N,N-Dimethyl-ethanolamin, deren Umsetzungsprodukte mit Alkylenoxiden wie Propylenoxid und/oder Ethylenoxid sowie sekundär-tertiäre Amine gemäß DE-OS 2 732 292.

Als Katalysatoren kommen ferner Silamine mit Kohlenstoff-Silizium-Bindungen, wie sie z.B. in der DE-PS 1 229 290 beschrieben sind, infrage, z.B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkylihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-OS 1 769 043) ferner Carboxylate, z.B. gemäß EP-OS 7 440 und EP-OS 56 158.

Als Co-Katalysatoren kommen ferner infrage:

Bismut-Katalysatoren gemäß DE-OS 3 008 811, US-PS 3 407 153, Blei-Verbindungen gemäß DE-OS 2 710 901, US-PS 3 474 075, Antimon-Verbindungen z.B. gemäß US-PS 3 245 958, US-PS 3 245 957, US-PS 3 620 985, US-PS 3 109 853, US-PS 3 407 153, US-PS 3 876 567, Zinksalze, z.B. gemäß GB-PS 980 139, Zirkonsalze, z.B. gemäß US-PS 4 312 971, Quecksilber-Verbindungen, z.B. gemäß US-PS 4 312 971, DE-OS 2 021 757, DE-AS 1 520 305, Verbindungen anderer Metalle wie Co, Ni, Fe, V, Mo, Ti, Wo, B, z.B. gemäß EP-OS 59 632, US-PS 3 808 162, FR-PS 2 301 554.

Die Reaktion zwischen NCO-Gruppen und zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in DE-OS 2 062 286, 2 062 289, 2 117 576, 2 129 198, 2 330 175 und 2 330 211 beschrieben.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-OS 2 434 185, 2 601 082 und 2 603 834).

Weitere Vertreter der Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

Die erfindungsgemäßen Massen können weiterhin oberflächenaktive Additive, innere Formtrennmittel, UV-Stabilisatoren, Thermostabilisatoren, Antiozonantien und Antioxydantien enthalten.

Beispiele von gegebenenfalls erfindungsgemäß mitzuverwendenden Hilfs- und Zusatzmitteln, d.h. von oberflächenaktiven Zusatzstoffen und Schaumstabilisatoren, flammhemmenden Substanzen, Weichmachern, anorganischen oder organischen Farbstoffen, Pigmenten und Füllstoffen, fungistatisch und bakteriostatisch wirksamen Substanzen sowie Einzeheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Bei der Durchführung des erfindungsgemäßen Verfahrens können auch die an sich bekannten äußeren oder inneren Formtrennmittel verwendet werden, wobei unter "äußeren Formtrennmitteln" insbesondere Wachse oder Metallseifen zu verstehen sind, während als "innere Formtrennmittel" beispielsweise die Formtrennmittel gemäß US-PS 3 726 952, GB-PS 1 365 215, DE-OS 2 356 692, DE-OS 2 363 452, DE-OS 2 404 310, DE-OS 2 427 273, DE-OS 2 431 968 oder GB-PS 1 420 293 verwendet werden können.

Zur Durchführung des erfindungsemäßen Verfahrens werden die Reaktionskomponenten nach dem an sich bekannten Einstufenverfahren, dem Prepolymerverfahren oder dem sogenannten Semiprepolymerverfahren zur Umsetzung gebracht, wobei man sich oft maschineller Einrichtungen bedient, z.B. solcher, die in US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Die erfindungsgemäße Beschichtungsmasse kann zu massiven oder zelligen geschäumten Gebilden verarbeitet werden. Sollen geschäumte Materialien mit einer Dichte < ca. 1 g/cm$^3$ hergestellt werden, so wird das erfindungsgemäße Verfahren in geschlossenen Formen unter Mitverwendung von sogenannten Treibmitteln durchgeführt. Dabei wird das Reaktionsgemisch in eine Form eingetragen. Als Formmaterial kommt Metall, z.B. Aluminium oder Kunststoff, z.B. Epoxidharz infrage. In der Form schäumt das schäumfähige Reaktionsgemisch auf und bildet den Formkörper. Im allgemeinen wird bei der Durchführung des erfindungsgemäßen Verfahrens in die Form eine solche Menge des schäumfähigen Reaktionsgemisches eingetragen, die bei freier Verschäumung zu einem Schaumstoff fuhren würde, dessen Volumen größer als das Innenvolumen der Form ist und vorzugsweise 120 bis 1000 % des Volumens der Form entspricht. In diesem Fall wird unter dem sogenannten "overcharging" gearbeitet; eine derartige Verfahrensweise ist z.B. aus US-PS 3 178 490 oder aus US-PS 3 182 104 bekannt.

Das Verfahren gestattet sowohl die Herstellung von weichen, halbharten oder harten Formschaumstoffen mit dichter Außehaut, zellförmigem Kern und integraler Dichteverteilung, worunter eine kontinuierliche Dichtezunahme vom Formkern nach außen zu verstehen ist. Die Frage der Härte der erfindungsgemäßen Verfahrensprodukte ist in erster Linie abhängig von der Funktionalität und der Kettenlänge der beim erfindungsgemäßen Verfahren eingesetzten Ausgangsmaterialien, d.h. vom Verzweigungsgrad dieser Ausgangssubstanzen. Vorzugsweise dient das erfindungsgemäße Verfahren zur Herstellung von harten Formschaumstoffen.

Die Verfahrensprodukte können in harter Einstellung zur Herstellung von Möbelteilen, Karosserieteilen von Fahrzeugen, technischen Geräten und Bauelementen Verwendung finden, sowie in halbharter bis weicher Einstellung zur Herstellung von Sicherheitspolsterungen im Automobilbau, elastischen Schuhsohlen, Stoßfängern usw.

Bevorzugter Verwendungszweck der erfindungsgemäßen Reaktivmassen ist jedoch die maschinelle Umkantung von Holzplatten mit geschäumten, bevorzugt jedoch massiven Umkantungen oder Umrandungen für den Möbelsektor. Die Verarbeitung erfolgt dabei zweckmäßigerweise so, daß Isocyanatkomponente (enthält Isocyanatverbindungen und gegebenenfalls Hilfs- und Zusatzmittel) und Polyolkomponente (enthält Polyol- und Vernetzerkomponente, bevorzugt den Katalysator und gegebenenfalls Hilfs- und Zusatzmittel) mittels eines 2-Komponenten-Mischkopfs maschinell vermischt und in eine beheizte Form ausgetragen werden.

Dabei kann im sogenannten "offenen Verfahren" gearbeitet werden. Hierzu wird das zu umkantende Möbelteil (Tischplatte, Schubladenteile etc.) mit der Unterseite nach oben in eine waagerecht angeordnete, auf 50 bis 70 ° C aufgeheizte Aluminiumform eingelegt, fixiert und dann der verbliebene Hohlraum mit Reaktivmasse ausgegossen und aushärten gelassen.

Beim "geschlossenen Verfahren" wird die zu belegende Platte ebenfalls in eine Form eingelegt und fixiert, dann aber das mit dem Einlegeteil versehene Formnest mit einem geeigneten Deckel verschlossen und weitgehend abgedichtet. In den überall geschlossenen Zwischenraum zwischen Formwandung und Einlegeteil kann nun Reaktivbeschichtungsmaterial eingedrückt werden.

Förderung und Einspritzung der Formmassen ist mit Niederdruckmaschinen möglich, die mit offenen und geschlossenen Formen arbeiten können. Bei den Förderorganen handelt es sich dabei um z.B. Zahnrad- oder Tauchkolbenpumpen üblicher Bauart. Als Mischorgane genügen statische Mischer. Die Temperatur der Komponenten beträgt 15 bis 40 ° C, bevorzugt 20 bis 25 ° C, die Formtemperatur 40 bis 70 ° C, bevorzugt 50 bis 60 ° C. Die Einfüllzeit ist 1 bis 3 Minuten. Bei den erfindungsgemäßen Reaktionssystemen kann 3 bis 5 Minuten nach Beendigung des Füllvorgangs entformt werden.

Bei den Hochdruckmaschinen handelt es sich um mit (Hub)-Kolbenpumpen ausgestattete Förderorgane aufweisende Misch- und Förderanlagen, die mit einem geeigneten Mischkopf ausgerüstet sind. Die Temperaturen der Komponenten betragen im allgemeinen 15 bis 45 ° C, bevorzugt 25 bis 35 ° C, die Formtemperatur 40 bis 80 ° C, bevorzugt 50 bis 60 ° C; 3 bis 5 Minuten nach Beendigung des Einfüllvorgangs kann entformt werden.

Aus den erfindungsgemäßen Massen hergestellte, ausgehärtete Beschichtungen sind licht-, feuchtigkeits- und temperaturstabil (normale Umwelt- und Gebrauchseinflüsse vorausgesetzt); sie sind beständig gegen Lösungsmittel und Chemikalien. Sie haften äußerst dicht und fest an jeder beliebig ausgeprägten Kantenoberfläche von Holzmaterialien, aber auch von gegebenenfalls vorbehandelten Oberflächen anderer Materialien, z.B. Kunststoff, jeglicher Dimensionierung.

## Allgemeine Versuchsbedingungen

Polyolkomponente und Polyisocyanatkomponente werden in getrennten Gefäßen aus den in den Versuchsbeispielen genannten Einzel-Komponenten zusammengemischt und gegebenenfalls bei 26,66 kPa (200 mm Hg) entgast. Die auf 30 ° C temperierten Polyol- und Polyisocyanatkomponenten werden über eine Hochdruckkolbenpumpe, z.B. HK 135 der Fa. Hennecke, im angegebenen Mischungsverhältnis (es wird immer eine Kennzahl von 106 eingehalten, d.h. Äquivalente NCO:OH = 1,06:1) in eine geschlossene, auf ca. 50 bis 60 ° C temperierte Form, die das zu umkantende Holzteil bereits in der richtigen Position enthält, innerhalb von ca. 10 bis 20 Sekunden eingefüllt. Nach Ablauf der Formverweilzeit (falls nicht anders angegeben 2 bis 3 Minuten) kann das Holzteil mit der angegossenen Umkantung aus der Form entnommen werden.

In einigen Versuchsbeispielen werden die an separat hergestellten Prüfkörpern für das jeweilige System ermittelten mechanischen Werte angeführt.

## Polyolkomponente I

Trifunktioneller Polyether, erhalten durch Addition von 86,5 Gew.-% Propylenoxid und 13,5 Gew.-% Ethylenoxid an Trimethylolpropan; OH-Zahl 35, Molekulargewicht 4800.

## Polyolkomponente II

Difunktioneller Polyether, erhalten durch Addition von 87 Gew.-% Propylenoxid und 13 Gew.-% Ethylenoxid an Propylenglykol; OH-Zahl 28, Molekulargewicht 4000.

## Polyolkomponente III

Umesterungsprodukt aus Rizinusöl und einem Kondensationsprodukt aus Cyclohexanon und Formaldehyd; OH-Zahl ca. 165.

## Polyolkomponente IV

50 %ige Anpastung eines Zeoliths der nominalen Porengröße 0,4 nm in Rizinusöl.

Polyolkomponente V

ZnO-Paste in einem Polyetherpolyol der OH-Zahl 17.

Polyolkomponente VI

33 %ige Lösung von Triethylendiamin in Dipropylenglykol.

Polyolkomponente VII

Rizinusöl, OH-Zahl 160.

Polyolkomponente VIII

Trifunktioneller Polyether, erhalten durch Addition von Propylenoxid an Trimethylolpropan; OH-Zahl 370.

Polyolkomponente IX

Polymerpolyol, hergestellt durch Pfropfen von 80 Gew.-Teilen eines trifunktionellen Polyethers mit OH-Zahl 35, der durch Addition von 83 Gew.-% Propylenoxid und 17 Gew.-% Ethylenoxid an Trimethylolpropan erhalten wurde, mit 20 Gew.-Teilen eines Monomerengemisches aus 60 Gew.-% Acrylnitril und 40 Gew.-% Styrol.

Polyolkomponente X

Polyester aus Adipinsäure und Butandiol-1,4/Ethylenglykol im Gewichtsverhältnis 1,44:1; OH-Zahl 55.

Polyisocyanatkomponente I

Semiprepolymer aus Isophorondiisocyanat und einem Propoxylierungsprodukt des Trimethylolpropans mit OH-Zahl 550; 33 Gew.-% NCO.

Polyisocyanatkomponente II

Semiprepolymer aus Isophorondiisocyanat und einem Addukt aus Glyzerin und Propylenoxid, OH-Zahl 670; 29,0 bis 29,3 Gew.-% NCO.

Polyisocyanatkomponente III

Trimerisat auf Basis Hexamethylendiisocyanat mit hohem Anteil an Hexamethylendiisocyanat-Uretdion, ca. 22 Gew.-% NCO.

Polyisocyanatkomponente IV

Aliphatisches, heterocyclisches Diisocyanat, erhalten durch Umsetzung von 2 mol Hexamethylendiisocyanat mit 1 mol $CO_2$, ca. 22 Gew.-% NCO.

Polyisocyanatkomponente V

Prepolymer aus 2 mol Hexamethylendiisocyanat und 1 mol Dipropylenglykol, 14,0 Gew.-% NCO.

Beispiel 1

| | |
|---|---|
| Polyol: | 45,75 Gew.-Teile Polyolkomponente I |
| | 47,75 Gew.-Teile Polyolkomponente II |
| | 8,50 Gew.-Teile Butandiol-1,4 |
| | 5,00 Gew.-Teile Polyolkomponente IV |
| | 4,00 Gew.-Teile Polyolkomponente V |

| | |
|---|---|
| Polyisocyanat: | Gemisch aus Polyisocyanatkomponenten II und IV im Gewichtsverhältnis 3:1 bis 1:3 |
| Katalyse: | 0,9 Gew.-% Dibutylzinndiacetat im Polyol |
| Verarbeitung: | 100 Gew.-Teile Polyol + Polyisocyanat entsprechend Kennzahl 106 (Äquivalentverhältnis NCO:OH-Gruppen = 1,06:1) |
| Ergebnis: | sehr geringe Gasbildung, kurze Formverweilzeit |

Beispiel 2

| | |
|---|---|
| Polyol: | siehe Beispiel 1 |
| Polyisocyanat: | Polyisocyanatkomponente II |
| Katalyse: | a) 0,6 Gew.-% Dibutylzinndilaurat im Polyisocyanat<br>b) 0,7 Gew.-% Diazabicycloundecen im Polyol und 0,6 Gew.-% Dibutylzinndilaurat im Polyisocyanat |
| Verarbeitung: | 100 Gew.-Teile Polyol + 37,5 Gew.-Teile Polyisocyanat (entspricht Kennzahl 106) |
| Ergebnis: | a) Haftung an Spanplatten gut, geringe Gasbildung<br>b) stärkere Gasbildung, nach 5 Minuten entformbar |

| Technische Daten: | |
|---|---|
| DIN 53 505 Härte Shore A | 65 |
| DIN 53 455 Zugfestigkeit (MPa) | 4,3 |
| DIN 53 455 Belastung bei 100 % Dehnung (MPa) | 2,6 |
| DIN 53 455 Bruchdehnung (%) | 200 |
| DIN 53 515 Weiterreißfestigkeit (N/mm) | 10,5 |
| DIN 53 516 Abrieb ($mm^3$) | 380 |
| DIN 53 516 Dichte 20 ° C ($g/cm^3$) | 1,05 |
| DIN 53 517 Druckverformungsrest, 70 ° C, 24 h, 25 % D, (%) | 10 |
| DIN 53 512 Elastizität (%) | 33 |

Beispiel 3

| | |
|---|---|
| Polyol: | siehe Beispiel 1 |
| Polyisocyanat: | Polyisocyanatkomponente I |
| Katalyse: | a) 0,6 Gew.-% Dibutylzinndilaurat in Polyisocyanat<br>b) 0,7 Gew.-% Diazabicycloundecen im Polyol und 0,6 Gew.-% Dibutylzinndilaurat im Polyisocyanat |
| Verarbeitung: | 100 Gew.-Teile Polyol + 33 Gew.-Teile Polyisocyanat (entspricht Kennzahl 106) |
| Ergebnis: | a) Haftung an Spanplatten gut, keine Gasbildung an der Spanplatte, Formverweilzeit > 20 Minuten<br>b) Gasbildung an der Spanplatte, nach 5 Minuten entformbar |

| Technische Daten: | |
|---|---|
| Härte Shore A | 58 |
| Zugfestigkeit (MPa) | 4,2 |
| Belastung bei 100 % Dehnung (MPa) | 1,9 |
| Bruchdehnung (%) | 270 |
| Weiterreißfestigkeit (N/mm) | 10,4 |
| Abrieb ($mm^3$) | 380 |
| Dichte 20 ° C ($g/cm^3$) | 1,05 |
| Druckverformungsrest, 70 ° C, 24 h, 25 % D, (%) | 12 |
| Elastizität (%) | 36 |

Beispiel 4

| | |
|---|---|
| Polyol: | 90 Gew.-Teile Polyolkomponente VII |
| | 10 Gew.-Teile Polyolkomponente VIII |
| | 4 Gew.-Teile Polyolkomponente V |
| | 5 Gew.-Teile Polyolkomponente IV |
| Polyisocyanat: | 25 Gew.-Teile Polyisocyanatkomponente IV |
| | 75 Gew.-Teile Polyisocyanatkomponente III |
| Katalyse: | 0,8 Gew.-% Dibutylzinndiacetat im Polyol |
| Verarbeitung: | entsprechend Kennzahl 106 |
| Ergebnis: | Geringe Gasbildung an der Spanplatte, mittlere Formverweilzeit |

Beispiel 5

| | |
|---|---|
| Polyol: | siehe Beispiel 4 |
| Polyisocyanat: | Polyisocyanatkomponente I |
| Katalyse: | 0,9 Gew.-% Dibutylzinndiacetat im Polyol |
| Verarbeitung: | entsprechend Kennzahl 106 |
| Ergebnis: | geringe Gasbildung, mittlere Formverweilzeit 10 bis 12 Minuten. |

Beispiel 6

| | |
|---|---|
| Polyol: | 95,0 Gew.-Teile Polyolkomponente III |
| | 5,0 Gew.-Teile Butandiol-1,4 |
| | 5,0 Gew.-Teile Polyolkomponente IV |
| | 4,0 Gew.-Teile Polyolkomponente V |
| | 0,6 Gew.-Teile Dibutylzinndiacetat |
| Polyisocyanat: | siehe Beispiel 4 |
| Verarbeitung: | 100 Gew.-Teile Polyol + 71 Gew.-Teile Polyisocyanat |
| Ergebnis: | keine Schaumbildung, kurze Formverweilzeit |

| Technische Daten: | |
|---|---|
| Härte Shore A | 68 |
| Härte Shore D | 20 |
| Lichtechtheitsnote | 7 |
| Zugfestigkeit (MPa) | 3,8 |
| Belastung bei 100 % Dehnung (MPa) | 3,3 |
| Bruchdehnung (%) | 150 |
| Dichte 20 ° C (g/cm$^3$) | 1,09 |
| Elastizität (%) | 5 |
| Weiterreißwiderstand (N/mm) | 7,3 |

Beispiel 7

| | |
|---|---|
| Polyol: | 95,0 Gew.-Teile Polyolkomponente III |
| | 5,0 Gew.-Teile Butandiol-1,4 |
| | 5,0 Gew.-Teile Polyolkomponente IV |
| | 4,0 Gew.-Teile Polyolkomponente V |
| Polyisocyanat: | Polyisocyanatkomponente V |
| Katalyse: | 0,8 Gew.-% Dibutylzinndiacetat im Polyol |
| Verarbeitung: | Kennzahl 106 |
| Ergebnis: | geringe Gasbildung an der Spannplatte, mittlere Formverweilzeit ca. 10 min |

Beispiel 8

| | |
|---|---|
| Polyol: | siehe Beispiel 7 |
| Polyisocyanat: | Polyisocyanatkomponente I |
| Katalyse: | 0,8 Gew.-% Dibutylzinndiacetat im Polyol |
| Verarbeitung: | Kennzahl 106 |
| Ergebnis: | geringe Gasbildung an der Spanplatte, lange Formverweilzeit > 15 min |

Beispiel 9

| | |
|---|---|
| Polyol: | 46,0 Gew.-Teile Polyolkomponente IX |
| | 46,0 Gew.-Teile Polyolkomponente II |
| | 8,0 Gew.-Teile Butandiol-1,4 |
| | 5,0 Gew.-Teile Polyolkomponente IV |
| | 4,0 Gew.-Teile Polyolkomponente V |
| Polyisocyanat: | siehe Beispiel 4 |
| Katalyse: | 0,8 Gew.-% Dibutylzinndiacetat im Polyol |
| Verarbeitung: | entsprechend Kennzahl 106 |
| Ergebnis: | sehr geringe Schaumbildung, mittlere Formverweilzeit 10 min |

Beispiel 10

| | |
|---|---|
| Polyol: | 95 Gew.-Teile Polyolkomponente X |
| | 5 Gew.-Teile Ethylenglykol |
| | 4 Gew.-Teile Polyolkomponente V |
| | 5 Gew.-Teile Polyolkomponente IV |
| Polyisocyanat: | siehe Beispiel 4 |
| Katalyse: | 0,9 Gew.-% Dibutylzinndiacetat im Polyol |
| Verarbeitung: | entsprechend Kennzahl 106 |
| Ergebnis: | geringe Gasbildung, mittlere Formverweilzeit 10 bis 12 min |

**Patentansprüche**

**1.** Verfahren zum Umkanten von Holzplatten, mit einer reaktionsfähigen Masse auf Polyurethan Basis aus

a) mindestens einer organischen Verbindung mit 2 bis 8 NCO-reaktiven Gruppen und einem durchschnittlichen Molekulargewicht von 400 bis 12000,

b) gegebenenfalls einer organischen Verbindung mit 2 bis 8 NCO-reaktiven Gruppen und einem durchschnittlichen Molekulargewicht von 62 bis 399,

c) Zinn-Katalysator,

d) aliphatischer Isocyanat-Verbindung mit mindestens zwei Isocyanatgruppen auf Basis von Hexamethylendiisocyanat, hydriertem Diphenylmethandiisocyanat oder Isophorondiisocyanat und

e) gegebenenfalls weiteren, an sich bekannten Hilfs- und Zusatzstoffen,

dadurch gekennzeichnet, daß die alipharnsche Isocyanat-Verbindung Urethan- und/oder Isocyanurat- und/oder Uretdion- und/oder Uretonimin- und/oder Oxadiazatrion- und/oder Biuret-Gruppen aufweist.

**Claims**

**1.** A process for the edge-banding of wooden boards with a polyurethane-based reactive composition of

a) at least one organic compound containing 2 to 8 NCO-reactive groups and having an average molecular weight of 400 to 12,000,

b) optionally an organic compound containing 2 to 8 NCO-reactive groups and having an average molecular weight of 62 to 399,

c) a tin catalyst,

d) an aliphatic isocyanate compound containing at least two isocyanate groups based on hexamethylene diisocyanate, hydrogenated diphenylmethane diisocyanate or isophorone diisocyanate and

e) optionally other auxiliaries and additives known per se,
characterized in that the aliphatic isocyanate compound contains urethane and/or isocyanurate and/or uretdione and/or uretoneimine and/or oxadiazinetrione and/or biuret groups.

## Revendications

**1.** Procédé pour recouvrir les bords de panneaux de bois d'une matière réactive à base de polyuréthanne, constituée

a) d'au moins un composé organique portant 2 à 8 groupes réactifs à l'égard de groupes NCO et d'un poids moléculaire moyen de 400 à 12 000,
b) le cas échéant d'un composé organique portant 2 à 8 groupes réactifs à l'égard de groupes NCO et ayant un poids moléculaire moyen de 62 à 399,
c) d'un catalyseur à l'étain
d) d'un composé isocyanate aliphatique portant au moins 2 groupes isocyanato à base d'hexaméthylène-diisocyanate, de diphénylméthane-diisocyanate hydraté ou d'isophorone-diisocyanate et
e) le cas échéant d'autres adjuvants et additifs connus,

caractérisé en ce que le composé isocyanate aliphatique porte des groupes uréthanne et/ou isocyanurate et/ou uret-dione et/ou urétone-imine et/ou oxadiazatrione et/ou biuret.